# EUROPÄISCHE PATENTSCHRIFT

(11) **EP 3 783 394 B1**
(45) Veröffentlichungstag und Bekanntmachung des Hinweises auf die Patenterteilung: **06.10.2021**
(21) Anmeldenummer: 19192984.3
(22) Anmeldetag: 22.08.2019
(51) Int. Cl.: G01V 8/20

(54) **LICHTGITTER UND VERFAHREN ZUM ERFASSEN VON OBJEKTEN**
LIGHT GRID AND METHOD FOR RECORDING OBJECTS
GRILLE LUMINEUSE ET PROCÉDÉ DE DÉTECTION D'OBJETS

(43) Veröffentlichungstag der Anmeldung: 24.02.2021
(73) Patentinhaber: SICK AG, 79183 Waldkirch (DE)
(72) Erfinder: Eble, Johannes, 79183 Waldkirch (DE)

(56) Entgegenhaltungen:
- EP-A1- 1 566 588
- EP-A1- 2 952 951
- EP-A1- 3 168 655
- EP-A2- 2 037 296

## Beschreibung

Die Erfindung betrifft ein Lichtgitter und ein Verfahren zum Erfassen von Objekten nach dem Oberbegriff von Anspruch 1 oder Anspruch 2 beziehungsweise Anspruch 15.

Lichtgitter umfassen eine Vielzahl von Lichtsendern und zugeordneten Lichtempfängern, so dass jeweils ein Paar aus einem Lichtsender und einem Lichtempfänger eine Lichtschranke bildet, die erkennt, ob der zwischen dem Lichtsender und dem Lichtempfänger aufgespannte Licht- oder Überwachungslichtstrahl von einem Objekt unterbrochen ist oder nicht. Durch die Verwendung einer Vielzahl von Lichtsendern und Lichtempfängern entsteht somit eine Überwachungsebene. Die Lichtsender und Lichtempfänger sind jeweils in einer Sendeeinheit und einer Empfangseinheit zusammengefasst, die einander gegenüber montiert werden. Es gibt auch Lichtgitter, in denen Lichtsender und Lichtempfänger in zwei einander gegenüberstehenden, gemischten Sende- und Empfangseinheiten untergebracht sind. Weiterhin sind Reflexionslichtgitter bekannt, bei denen Sende- und Empfangseinheiten auf einer Seite eines Überwachungsbereiches angebracht sind und ein Retroreflektor auf der gegenüberliegenden Seite.

Die Vorstellung von Lichtstrahlen ist idealisiert. Tatsächlich erzeugen die Lichtsender Sendelichtkeulen, und die Lichtempfänger erfassen Licht innerhalb von Empfangslichtkeulen, wobei die Größe des Querschnitts dieser Keulen von den Öffnungswinkeln abhängt und mit dem Abstand zunimmt. Unter einer Anordnung von Lichtstrahlen oder optischen Elementen in einer Ebene ist im Folgenden somit zu verstehen, dass die optischen Achsen der Lichtkeulen beziehungsweise Lichtstrahlen oder der optischen Elemente im Wesentlichen in dieser Ebene liegen. Unter einer Ausbreitungsrichtung von Lichtstrahlen ist im Folgenden beispielsweise die optische Achse zu verstehen, entlang derer sich ein von einem Lichtsender emittierter Licht- oder Überwachungslichtstrahl zu dem zugeordneten Lichtempfänger ausbreitet.

Um Justageanforderungen im Lichtgitter handhabbar zu halten, überlappen die Sende-und Empfangslichtkeulen aufgrund der Strahldivergenz regelmäßig nicht nur für die einander gegenüberliegend zugeordneten Lichtsender und Lichtempfänger, sondern auch für deren Nachbarn. Um Fehlauswertungen zu vermeiden, werden deshalb die Lichtsender und Lichtempfänger zyklisch aktiviert. Dabei werden nacheinander von jedem Lichtsender einzelne Lichtpulse oder Pakete ausgesandt, und für ein gewisses Zeitfenster wird nur der zugehörige Lichtempfänger aktiviert, um festzustellen, ob sich in dem jeweiligen Lichtstrahl ein Objekt befindet.

Ein Anwendungsfeld für Lichtgitter ist die Sicherheitstechnik. Die Lichtstrahlen dienen dabei als eine Art virtuelle Wand, und bei Unterbrechung durch ein Objekt wird beispielsweise eine Gefahrenquelle abgesichert. In der Automatisierungstechnik werden Lichtgitter ebenfalls zur Anwesenheitserkennung, aber auch zur Vermessung von Objekten eingesetzt, um die Position und Ausdehnung von Objekten anhand der Position und Anzahl unterbrochener Strahlen zu messen. Beispielsweise kann auf diesem Weg die Höhe von auf einem Förderband bewegten Objekten bestimmt werden.

Nachteilig bei Lichtgittern ist oft die begrenzte Auflösung. Man bezeichnet das kleinste noch detektierbare Objekt als MDO (minimal detectable object). Das MDO blockiert einen Lichtstrahl in jeder Position gerade noch so weit, dass das Empfangssignal unter die Schaltschwelle absinkt. Die Größe des MDO wird durch den gegenseitigen Abstand zweier benachbarter Lichtstrahlen begrenzt. Der Abstand zwischen je zwei Lichtsendern beziehungsweise Lichtempfängern wird auch als Raster bezeichnet. Befindet sich ein Objekt in einer Lücke zwischen zwei Lichtstrahlen, kann es nicht erkannt werden. Je kleiner das MDO sein soll, desto geringer muss der Strahlabstand sein.

Eine naheliegende Möglichkeit, das Auflösungsvermögen eines Lichtgitters zu erhöhen beziehungsweise kleinere Objekte zu detektieren, ist demnach eine Verringerung des Strahlabstands beziehungsweise eine Verkleinerung des Rasters, um die Lücke zwischen zwei benachbarten Lichtstrahlen zu verkleinern. Der minimal erreichbare Abstand zwischen je zwei Lichtsendern beziehungsweise Lichtempfängern ist jedoch durch die Grundfläche der Bauelemente begrenzt. Üblicherweise ist diese Grundfläche größer als der optisch aktive Bereich des Bauelements, in der Regel die Ausgangsapertur des Lichtsenders beziehungsweise die Eingangsapertur des Lichtempfängers. Aus dem Stand der Technik sind daher Lichtgitteranordnungen bekannt, bei denen die Lichtsender beziehungsweise Lichtempfänger jeweils horizontal und vertikal versetzt angeordnet sind, so dass praktisch ein Lichtgitter mit zwei parallelen, horizontal zueinander versetzten Überwachungsebenen entsteht, und die Überwachungslichtstrahlen zudem vertikal zueinander versetzt sind. Mit horizontal versetzt ist im Sinne dieser Anmeldung ein Versatz entlang der Flächennormalen der Überwachungsebenen, mit vertikal versetzt ein Versatz senkrecht zur Flächennormalen der Überwachungseben und senkrecht zur Ausbreitungsrichtung der Überwachungslichtstrahlen zu verstehen. Für einen Pfad, der senkrecht durch die Überwachungsebenen verläuft, wird das MDO durch die versetze Anordnung der Überwachungslichtstrahlen kleiner. Beispielsweise können so zwei Überwachungsebenen, die jeweils einen Überwachungsrasterabstand von 4mm aufweisen, durch vertikale Verschiebung der Ebenen zueinander zu einem Lichtgitter mit einem Überwachungsrasterabstand von 2mm kombiniert werden. Für einen nicht senkrecht durch die Überwachungsebenen verlaufenden Pfad kann sich aber aufgrund des notwendigen horizontalen Abstands der Überwachungsebenen eine abweichende MDO Größe ergeben, die wiederum größer ist als die minimal erreichbare Größe des MDO bei senkrechten Durchgang durch das Lichtgitter. Das bedeutet, dass die Größe des MDO abhängig davon ist, wie ein Objekt durch das Lichtgitter hindurchtritt. Nachteilig bei der Anordnung zweier zueinander versetzter Überwachungsebenen ist zudem, dass der Zeitpunkt der Detektion eines Objektes beim Durchgang durch die Lichtgitter abhängig vom Ort des Durchgangs sein kann.

Die EP 2037296 B1 beschreibt ein Lichtgitter mit zueinander versetzt angeordneten Lichtsendern und Lichtempfängern, wobei aber nicht alle Überwachungslichtstrahlen in einer Überwachungsebene liegen.

Die EP 2157449 B1 beschreibt ein Lichtgitter mit optischen Umlenkelementen, in diesem Fall Prismen, zur Umlenkung von Überwachungslichtstrahlen. Das Umlenken von Überwachungslichtstrahlen aus mehreren Ebenen in einen gemeinsame Überwachungsebene wird aber nicht offenbart.

Es ist daher Aufgabe der Erfindung, das Messverhalten eines Lichtgitters unter Vermeidung der angesprochenen Nachteile zu verbessern.

Diese Aufgabe wird durch ein Lichtgitter und ein Verfahren zum Erfassen von Objekten nach Anspruch 1 oder Anspruch 2 beziehungsweise Anspruch 15 gelöst.

Ein gattungsgemäßes Lichtgitter weist zunächst eine erste Ebene mit einer Vielzahl von vorzugsweise gleichmäßig mit einem ersten Senderrasterabstand zueinander angeordneten ersten Lichtsendern auf, die in der ersten Ebene erste Überwachungslichtstrahlen aussenden. Weiterhin ist eine zweite Ebene mit einer Vielzahl von vorzugsweise gleichmäßig mit einem zweiten Senderrasterabstand zueinander angeordneten zweiten Lichtsendern vorgesehen, die in der zweiten Ebene zweite Überwachungslichtstrahlen aussenden. Das Lichtgitter weist zudem eine Vielzahl von Lichtempfängern auf, wobei jedem Lichtsender ein Lichtempfänger zugeordnet ist.

Die erste und zweite Ebene liegen parallel zueinander und weisen entlang ihrer Flächennormale einen Abstand auf, der im Folgenden auch als horizontaler Abstand bezeichnet wird. Die ersten und zweiten Lichtsender sind zudem senkrecht zur Flächennormalen der ersten und zweiten Ebene sowie senkrecht zur Ausbreitungsrichtung der ersten und zweiten Überwachungslichtstrahlen gegeneinander versetzt angeordnet. Dieser Versatz oder Abstand wird im Folgenden auch als vertikaler Versatz oder vertikaler Abstand bezeichnet. Damit ergibt sich für Objekte, die sich senkrecht zur ersten und zweiten Ebene durch das Lichtgitter bewegen, ein Überwachungsrasterabstand der Überwachungslichtstrahlen, der kleiner als der erste und/oder der zweite Senderrasterabstand ist.

Die Erfindung geht nun von dem Grundgedanken aus, die Überwachungslichtstrahlen aus der ersten und zweiten Ebene mit Hilfe einer geeigneten Optik so zusammenzuführen, dass sie in einer gemeinsamen Überwachungsebene liegen.
Zum Zusammenführen der Überwachungslichtstrahlen wird vorgeschlagen, dass den ersten und/oder den zweiten Lichtsendern wenigstens je ein senderseitiges optisches Umlenkelement zugeordnet wird, welches die Überwachungslichtstrahlen der Lichtsender in eine gemeinsame Überwachungsebene ablenkt.

Da alle Überwachungslichtstrahlen in einer gemeinsamen Überwachungsebene liegen, hat die Erfindung den Vorteil, dass eine deutliche Auflösungsverbesserung erzielt werden kann, die insbesondere unabhängig von der Durchtrittsrichtung eines Objekts durch das Lichtgitter ist. Die erreichbare Auflösung ist zudem nahezu unabhängig von den Grundflächen der verwendeten optoelektronischen Bauelemente.

Wenn die Grundfläche der Lichtempfänger so klein ist, dass auf eine versetzte Anordnung der Lichtempfänger verzichtet werden kann, können in einer Ausführungsform alle Lichtsender in der gemeinsamen Überwachungsebene angeordnet und mit dem Überwachungsrasterabstand der Überwachungslichtstrahlen beabstandet sein.

Falls die Grundfläche der Lichtsender so klein ist, dass auf eine versetzte Anordnung der Lichtsender verzichtet werden kann, so dass diese alle in einer gemeinsamen Überwachungsebene angeordnet sind und die die Lichtempfänger aufgrund ihrer Baugröße versetzt angeordnet werden müssen, ist es in einer alternativen Ausführungsform ebenfalls möglich, dass den ersten und/oder den zweiten Lichtempfängern wenigstens je ein empfängerseitiges optisches Umlenkelement zugeordnet wird, welches die Überwachungslichtstrahlen der Lichtsender aus der gemeinsamen Überwachungsebene auf die Lichtempfänger ablenkt.

In einer Ausführungsform ist den ersten und den zweiten Lichtsendern je wenigstens ein senderseitiges optisches Umlenkelement zugeordnet, welches die Überwachungslichtstrahlen der Lichtsender in die gemeinsame Überwachungsebene ablenkt und den ersten und den zweiten Lichtempfängern je wenigstens ein empfängerseitiges optisches Umlenkelement zugeordnet, welches die Überwachungslichtstrahlen aus der gemeinsamen Überwachungsebene auf die Lichtempfänger ablenkt. Die optischen Umlenkelemente lenken die Überwachungslichtstrahlen derart ab, dass die gemeinsame Überwachungsebene parallel zu und zwischen der ersten und der zweiten Ebene liegt. Diese Ausführungsform ist insbesondere dann zu wählen, wenn sowohl Lichtsender als auch Lichtempfänger aufgrund ihrer Baugröße versetzt angeordnet werden müssen.

In einer alternativen Ausführungsform ist den ersten Lichtsendern wenigstens ein senderseitiges optisches Umlenkelement zugeordnet, das die Überwachungslichtstrahlen in die zweite Ebene umlenkt, und den ersten Lichtempfängern wenigstens ein empfängerseitiges optisches Umlenkelement zugeordnet, das die Überwachungslichtstrahlen aus der zweiten Ebene auf die Lichtempfänger ablenkt. Die gemeinsame Überwachungsebene fällt somit mit der zweiten Ebene zusammen. Diese Anordnung hat den Vorteil, dass weniger optische Bauteile benötigt werden.

In einer weiteren Ausführungsform ist das Lichtgitter als Reflexionslichtgitter ausgelegt. Lichtsender und Lichtempfänger sind auf einer Seite des Überwachungsbereichs angeordnet, auf der anderen Seite des Überwachungsbereichs weist das Lichtgitter einen Reflektor auf, insbesondere einen Retroreflektor, der die Überwachungslichtstrahlen von den Lichtsendern auf die Lichtempfänger reflektiert. Diese Anordnung ist beispielsweise von Vorteil, wenn der Bauraum auf einer Seite des Überwachungsbereichs begrenzt ist.

In den verschiedenen Ausführungsformen können vorzugsweise der erste und der zweite Sender- und/oder Empfängerrasterabstand im Wesentlichen, also im Rahmen üblicher optischer und mechanischer Toleranzen, gleich sein und der gemeinsame Überwachungsrasterabstand im Wesentlichen halb so groß wie der erste oder der zweite Sender- und/oder Empfängerrasterabstand sein.

In einer Ausführungsform der Erfindung kann der Überwachungsrasterabstand der Überwachungslichtstrahlen in der gemeinsamen Überwachungsebene höchstens 2,5 mm, vorzugsweise höchstens 1,5 mm sein.

In einer weiteren Ausführungsform können die Lichtempfänger und/oder die Lichtempfänger auch in mehr als zwei parallelen Ebenen angeordnet sein. Rein beispielhaft können die Lichtempfänger und/oder die Lichtempfänger in vier parallelen Ebenen angeordnet sein. Vorzugsweise können in dieser Ausführungsform ein erster, zweiter, dritter und vierter Sender- und/oder Empfängerrasterabstand im Wesentlichen, also im Rahmen üblicher optischer und mechanischer Toleranzen, gleich sein und der gemeinsame Überwachungsrasterabstand beträgt dann im Wesentlichen ein Viertel des ersten, zweiten, dritten oder vierten Sender- und/oder Empfängerrasterabstands.

Die optischen Umlenkelemente können modular ausgelegt sein. In den verschieden Ausführungsformen kann beispielsweise jedem Lichtempfänger oder Lichtsender je ein eigenes optisches Umlenkelement zugeordnet sein. Alternativ kann Gruppen von Lichtempfängern oder Lichtsendern, beispielsweise zehn Lichtempfängern oder Lichtsendern, je ein optisches Umlenkelement zugeordnet sein. Es ist auch möglich, allen Lichtempfängern oder Lichtsendern jeweils ein gemeinsames optisches Umlenkelement zuzuordnen, womit sich die Anzahl einzelner optischer Komponenten reduziert. Grundsätzlich lassen sich sowohl aus einzelnen optischen Umlenkelementen wie aus Modulen mit mehreren optischen Umlenkelementen Lichtgitter beliebiger Länge realisieren.

Die Flächen der optischen Umlenkelemente können Beschichtungen aufweisen, um eine effiziente, nahezu verlustfreie Umlenkung der Überwachungslichtstrahlen zu gewährleisten. Vorzugsweise weisen die Flächen, durch die die Überwachungslichtstrahlen in das optische Umlenkelement eintreten beziehungsweise aus dem optischen Umlenkelement austreten, geeignete Antireflexbeschichtungen auf. Die Flächen, an denen die Überwachungslichtstrahlen reflektiert werden, sind vorzugsweise verspiegelt.

Die optischen Umlenkelemente können gekrümmte Flächen aufweisen und somit nicht nur zur Strahlumlenkung, sondern sowohl senderseitig als auch empfängerseitig zur Strahlformung verwendet werden. Im Falle eines empfängerseitigen optischen Umlenkelements können eine oder mehrere Flächen so gekrümmt sein, dass sie die Überwachungslichtstrahlen auf den Lichtempfänger fokussieren. Dies hat den Vorteil einer Signalerhöhung am Lichtempfänger.

Die optischen Umlenkelemente können Blenden zur Filterung von Streulicht aufweisen, wobei die Blenden so angeordnet sein können, dass sie in einer durch die gekrümmten Flächen definierten Brennebene liegen. Im Falle eines empfängerseitigen optischen Umlenkelements können die Blenden so ausgelegt sein, dass sie einen Empfangswinkel der Lichtempfänger einschränken. Im Falle eines senderseitigen optischen Umlenkelements können die Blenden so ausgelegt sein, dass sie einen Abstrahlwinkel der Lichtsender beschränken Die Blenden können dabei einen Durchmesser von vorzugsweise 0,5 mm bis 1,5 mm aufweisen

Die optischen Umlenkelemente können optisch auch so ausgelegt werden, dass die Reflexionen im Innern der optischen Umlenkelemente durch Totalreflexion (total internal reflection, TIR) erfolgen. Dazu müssen die Reflexionsflächen abhängig vom Brechungsindex des verwendeten Materials angepasst werden.

Die optischen Umlenkelemente können senderseitig und empfängerseitig geometrisch und optisch gleich ausgeführt sein, also beispielswiese dieselben Dimensionen, Krümmungen, Blenden und/oder Beschichtungen aufweisen, womit sich die Anzahl verschiedener optischer Komponenten im Lichtgitter reduziert.

Die optischen Umlenkelemente weisen im Bereich der gemeinsamen Überwachungsebene eine geringere Breite, also eine Ausdehnung parallel zur gemeinsamen Überwachungsebene, auf als im Bereich der ersten oder zweiten Ebene, in der die Lichtsender und/oder Lichtempfänger angeordnet sind. Damit ist eine verschachtelte, raumsparende Anordnung der optischen Umlenkelemente möglich.

Die optischen Umlenkelemente können aus optisch transparenten Materialen wie beispielsweise PMMA, PC oder Zeonex bestehen und beispielswiese im Spritzgussverfahren oder auch durch spanende Bearbeitung hergestellt werden.

Das Lichtgitter weist bevorzugt eine Steuer- und Auswertungseinheit auf, die dafür ausgebildet ist, die Überwachungslichtstrahlen nacheinander zu aktivieren, indem jeweils nur bestimmte Lichtsender und Lichtempfänger gleichzeitig aktiviert werden. Dies dient dazu, ungewolltes Übersprechen zwischen den Überwachungslichtstrahlen zu verhindern. Dabei sind verschiedene Schemata denkbar. Vorzugsweise werden die Lichtsender zyklisch nacheinander aktiviert und mit dem jeweils aktiven Lichtsender durch gleichzeitige Aktivierung eines oder mehrerer von dem Lichtsender beleuchteter Lichtempfänger einzelne oder mehrere Überwachungslichtstrahlen gebildet. Bei längeren Lichtgittern mit vielen Lichtsendern und Lichtempfängern kann das Aktivierungsschema gruppenweise wiederholt werden, wobei dann beispielsweise mehrere Lichtsender in untereinander zur Vermeidung gegenseitiger Beeinflussung ausreichendem Abstand gleichzeitig aktiv sind. Die Auswertungseinheit erkennt vorzugsweise auch anhand eines Empfangssignals des jeweils aktiven Lichtempfängers, ob der Überwachungslichtstrahl unterbrochen ist, und stellt so die Anwesenheit eines Objekts in diesem Überwachungslichtstrahl fest.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1a: eine schematische Darstellung eines Lichtgitters gemäß dem Stand der Technik;
- Fig. 1b: eine schematische Aufsicht des Lichtgitters aus Figur 1a;
- Fig. 2a: eine schematische, perspektivische Darstellung einer Ausführungsform ei-nes erfindungsgemäßen Lichtgitters mit senderseitigen und empfängerseiti-gen optischen Umlenkelementen;
- Fig. 2b: eine schematische Aufsicht des Lichtgitters aus Figur 2a;
- Fig. 3a: eine schematische, perspektivische Darstellung einer alternativen Ausfüh-rungsform eines erfindungsgemäßen Lichtgitters mit senderseitigen und empfängerseitigen optischen Umlenkelementen;
- Fig. 3b: eine schematische Aufsicht des Lichtgitters aus Figur 3a;
- Fig. 4a: eine schematische, perspektivische Darstellung einer Ausführungsform ei-nes erfindungsgemäßen Lichtgitters mit senderseitigen optischen Umlen-kelementen:
- Fig. 4b: eine schematische Aufsicht des Lichtgitters aus Figur 4a:
- Fig. 4c: eine schematische, perspektivische Darstellung einer Ausführungsform ei-nes erfindungsgemäßen Lichtgitters mit senderseitigen optischen Umlen-kelementen;
- Fig. 4d: eine schematische Aufsicht des Lichtgitters aus Figur 4c;
- Fig. 5a: eine schematische, perspektivische Darstellung einer weiteren Ausfüh-rungsform eines erfindungsgemäßen Lichtgitters mit senderseitigen und empfängerseitigen optischen Umlenkelementen als Reflexionslichtgitter;
- Fig. 5b: eine schematische Aufsicht des Lichtgitters aus Figur 5a;
- Fig. 6: eine schematische, perspektivische Darstellung eines senderseitigen opti-schen Umlenkelements;
- Fig. 7: eine schematische, perspektivische Darstellung eines empfängerseitigen optischen Umlenkelements;
- Fig. 8: eine schematische, perspektivische Darstellung eines Moduls aus mehreren senderseitigen optischen Umlenkelementen
- Fig. 9: eine schematische, perspektivische Darstellung von zwei verschachtelt an-geordneten Modulen aus mehreren senderseitigen optischen Umlenkele-menten;
- Fig. 10a: eine schematische, perspektivische Darstellung eines alternativen sender-seitigen optischen Umlenkelements;
- Fig. 10b: eine schematische, perspektivische Darstellung eines senderseitigen opti-schen Umlenkelements; und
- Fig. 11: eine schematische, perspektivische Darstellung eines alternativen Moduls aus mehreren senderseitigen optischen Umlenkelementen.

Gleiche Bezugszeichen in den Figuren bezeichnen gleiche Elemente.

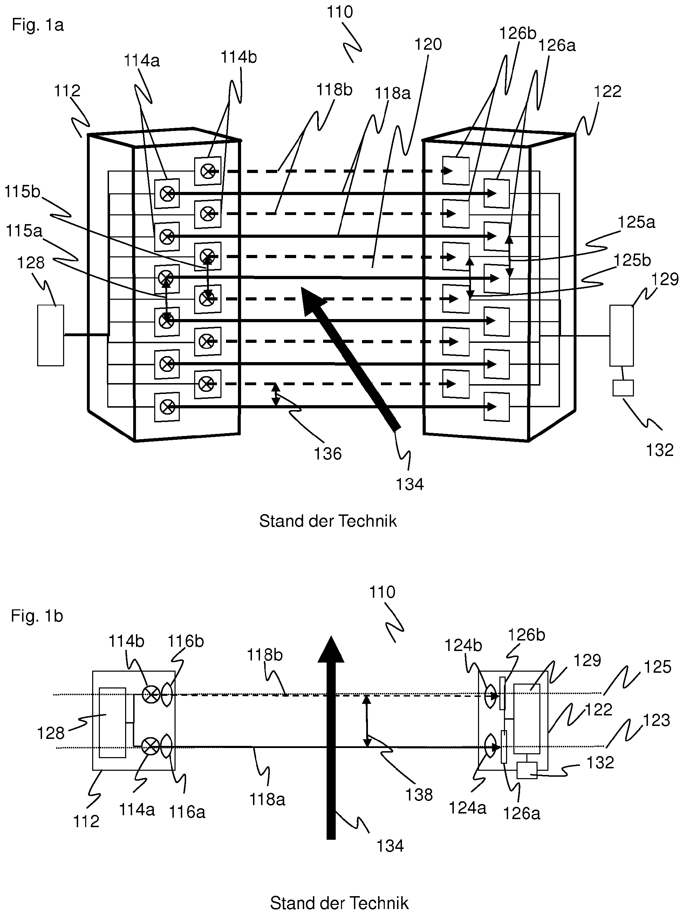

Figur 1a zeigt eine schematische, perspektivische Darstellung eines Lichtgitters 110 gemäß dem Stand der Technik. Eine Sendeeinheit 112 umfasst eine Vielzahl versetzt angeordneter erster Lichtsender 114a und zweiter Lichtsender 114b. Die ersten Lichtsender 114a sind in einem ersten vertikalen Senderrasterabstand 115a angeordnet. Die zweiten Lichtsender 114b sind in einem zweiten vertikalen Senderrasterabstand 115b angeordnet.

Das Licht der Lichtsender 114a, 114b wird jeweils durch nachgeordnete Sendeoptiken (nicht gezeigt) als Überwachungslichtstrahlen 118a, 118b zu einer Empfangseinheit 122 gesandt.

Die Überwachungslichtstrahlen 118a, 118b treffen jeweils über Empfangsoptiken (nicht gezeigt) auf erste Lichtempfänger 126a und zweite Lichtempfänger 126b. Je nach Anwendung und Ausführungsform kann auch auf die Sendeoptiken und Empfangsoptiken verzichtet werden.

Die ersten Lichtempfänger 126a sind in einem ersten vertikalen Empfängerrasterabstand 125a angeordnet, und die zweiten Lichtempfänger 126b sind in einem zweiten vertikalen Empfängerrasterabstand 125b angeordnet.

Die ersten Lichtsender 114a und ersten Lichtempfänger 126a liegen in einer ersten Ebene, die zweiten Lichtsender 114b und zweiten Lichtempfänger 126b liegen in einer zweiten Ebene, wobei die Ebenen parallel zueinander sind.

Damit ergibt sich ein Überwachungsbereich 120 mit zwei parallelen Überwachungsebenen, wobei die Überwachungslichtstrahlen 118a, 118b durch die versetzte Anordnung der Lichtsender 114a, 114b und Lichtempfänger 126a, 125b für Objekte, die sich entlang eines senkrecht zu den Überwachungsebenen stehenden Pfades 134 bewegen, ein vertikaler Überwachungsrasterabstand 136 ergibt, der geringer ist als der erste und/oder zweite Senderrasterabstand 115a, 115b und der erste und/oder zweite Empfängerrasterabstand 125a, 125b.

In der Sendeeinheit 112 ist eine Sendersteuerung 128 mit den Lichtsendern 114a, 114b verbunden, um bestimmte Lichtsender 114a, 114b mit Sendemustern, beispielsweise Pulsen oder Pulsfolgen zu aktivieren. Entsprechend ist in der Empfangseinheit 122 eine Auswertungseinheit 129 mit den Lichtempfängern 126a, 126b verbunden, um deren Empfangssignale auszuwerten.

Es werden jeweils gleichzeitig nur ein Lichtsender 114a, 114b und ein Lichtempfänger 126a, 126b, somit nur ein Überwachungslichtstrahl 118a, 118b aktiviert. Außerhalb der Nachbarschaft, wenn also Mehrdeutigkeiten durch genügend Abstand sicher verhindert sind, können abweichend auch weitere Überwachungslichtstrahlen 118a, 118b parallel aktiviert werden.

Damit Lichtsender 114a, 114b und Lichtempfänger 126a, 126b gleichzeitig aktiviert werden können, ist eine Synchronisation zwischen Sendersteuerung 128 und Auswertungseinheit 129 erforderlich. Dies kann leitungsgebunden oder optisch erfolgen und wird hier nicht näher beschrieben, weil es an sich bekannt ist.

Die Sequenz, mit der die Überwachungslichtstrahlen 118a, 118b zyklisch nacheinander aktiviert werden, ist im Prinzip beliebig. Für den jeweils aktiven Überwachungslichtstrahl 118a, 118b wird anhand des Empfangssignals festgestellt, beispielsweise durch einen Schwellenvergleich, ob ein Objekt den Überwachungslichtstrahl 118a, 118b unterbricht. Somit stellt das Lichtgitter 110 fest, ob sich ein Objekt in dem Überwachungsbereich 120 befindet.

Eine gewisse Positions- oder Höheninformation lässt sich daraus ablesen, welche Überwachungslichtstrahlen 118a, 118b die Unterbrechung detektiert haben, aber wegen des Versatzes der Überwachungslichtstrahlen 118a, 118b hängt dies auch noch von der unbekannten Position des Objekts entlang des senkrecht zur den Überwachungsebenen stehenden Pfades 134 ab.

Das Lichtgitter 110 stellt das Erfassungsergebnis, also beispielsweise ein Schaltsignal je nach An- oder Abwesenheit von Objekten in dem Überwachungsbereich oder eine zumindest grobe Positions- oder Geometrieinformation, an einem Ausgang 132 bereit.

Figur 1b zeigt eine Aufsicht des Lichtgitters 110 aus Figur 1a. Zusätzlich erkennbar sind die erste Ebene 123 und die zweite Ebene 125, die optionalen Sendeoptiken 116a, 116b und Empfangsoptiken 124a, 124b, sowie insbesondere der horizontale Abstand 138 der Überwachungslichtstrahlen 118a, 118b entlang des senkrecht zur den Überwachungsebenen stehenden Pfades 134.

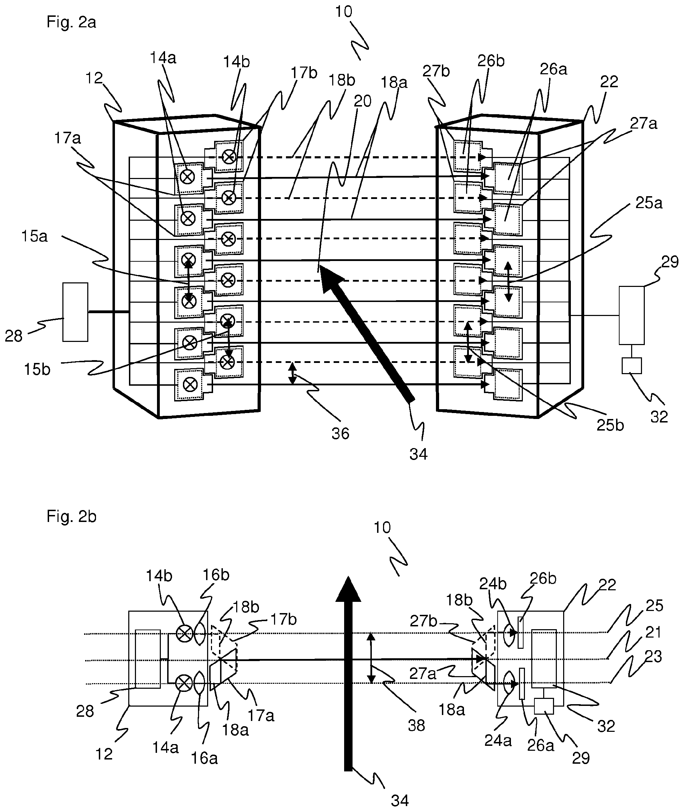

Figur 2 zeigt eine schematische, perspektivische Darstellung einer ersten Ausführungsform eines erfindungsgemäßen Lichtgitters 10.

Vergleichbar zum Stand der Technik umfasst eine Sendeeinheit 12 eine Vielzahl versetzt angeordneter erster Lichtsender 14a und zweiter Lichtsender 14b, beispielsweise LEDs oder Laser im infraroten oder einem anderen Spektrum.

Die ersten Lichtsender 14a sind in einem ersten Senderrasterabstand 15a angeordnet. Die zweiten Lichtsender 14b sind in einem zweiten Senderrasterabstand 15b angeordnet.

Eine Vielzahl von ersten Lichtempfängern 26a sind in einem ersten Empfängerrasterabstand 25a angeordnet, und eine Vielzahl von zweiten Lichtempfängern 26b sind in einem zweiten Empfängerrasterabstand 25b angeordnet.

Die ersten Lichtsender 14a und ersten Lichtempfänger 26a liegen in einer ersten Ebene, die zweiten Lichtsender 14b und zweiten Lichtempfänger 26b liegen in einer zweiten Ebene, wobei die Ebenen parallel zueinander sind.

Das Licht der Lichtsender 14a, 14b gelangt jeweils durch nachgeordnete Sendeoptiken (nicht gezeigt) zu optischen Umlenkelementen 17a, 17b, die Überwachungslichtstrahlen 18a, 18b in eine gemeinsame Überwachungsebene umlenken.

Optische Umlenkelemente 27a, 27b in der Empfangseinheit 22 lenken die Überwachungslichtstrahlen 18a, 18b jeweils zurück in die erste und zweite Ebene um, in denen sie jeweils über Empfangsoptiken (nicht gezeigt) auf die Lichtempfänger 26a, 26b treffen, die meist als Fotodiode ausgebildet sind, alternativ aber auch als ortsauflösende CCD- oder CMOS-Bildsensoren.

Je nach Anwendung und Ausführungsform kann auch auf die Sendeoptiken und Empfangsoptiken verzichtet werden.

Durch die versetzte Anordnung der Lichtsender 14a, 14b und der Lichtempfänger 26a, 26b ergibt sich ein vertikaler Überwachungsrasterabstand 36, der geringer ist als der erste und/oder zweite Senderrasterabstand 15a, 15b, wobei in diesem Fall der erste und der zweite Senderrasterabstand 15a, 15b im Rahmen üblicher Toleranzen gleich groß sind und der Überwachungsrasterabstand 36 im Rahmen üblicher Toleranzen dem halben Senderrasterabstand 15a, 15b entspricht.

Da die Überwachungslichtstrahlen 18a, 18b in einer gemeinsamen Überwachungsebene liegen, ergibt sich der Überwachungsrasterabstand 36 auch für Objekte, die sich nicht direkt entlang eines senkrecht zur gemeinsamen Überwachungsebenen stehenden Pfades 34 bewegen.

In der Sendeeinheit 12 ist eine Sendersteuerung 28 mit den Lichtsendern 14a, 14b verbunden, um bestimmte Lichtsender 14a, 14b mit Sendemustern, beispielsweise Pulsen oder Pulsfolgen zu aktivieren.

Entsprechend ist in der Empfangseinheit 22 eine Auswertungseinheit 29 mit den Lichtempfängern 26a, 26b verbunden, um deren Empfangssignale auszuwerten. Es werden vorzugsweise jeweils gleichzeitig nur ein Lichtsender 14a, 14b und ein Lichtempfänger 26a, 26b, somit nur ein Überwachungslichtstrahl 18a, 18b aktiviert.

Außerhalb der Nachbarschaft, wenn also Mehrdeutigkeiten durch genügend Abstand sicher verhindert sind, können abweichend auch weitere Überwachungslichtstrahlen 18a, 18b parallel aktiviert werden.

Damit Lichtsender 14a, 14b und Lichtempfänger 26a, 26b gleichzeitig aktiviert werden können, ist eine Synchronisation zwischen Sendersteuerung 28 und Auswertungseinheit 29 erforderlich. Dies kann leitungsgebunden oder optisch erfolgen und wird hier nicht näher beschrieben, weil es an sich bekannt ist.

Figur 2b zeigt eine Aufsicht des Lichtgitters 10 aus Figur 2a. Zusätzlich erkennbar sind hier die optionalen Sendeoptiken 16a, 16b und Empfangsoptiken 24a, 24b, sowie insbesondere der horizontale Abstand 38 der ersten Ebene 23 und der zweiten Ebene 25 entlang eines senkrecht zur den Überwachungsebenen stehenden Pfades 34.
Weiterhin ist das Umlenken der Überwachungslichtstrahlen 18a aus der ersten Ebene 23 und der Überwachungslichtstrahlen 18b aus der zweiten Ebene 25 in die gemeinsame Überwachungsebene 21 durch die optischen Umlenkelemente 17a, 17b und das Umlenken der Überwachungslichtstrahlen 18a, 18b aus der gemeinsamen Überwachungsebene 21 zurück in die erste Ebene 23 und die zweite Ebene 25 durch die optischen Umlenkelemente 27a, 27b gezeigt.

Grundsätzlich sind auch kombinierte Sende- und Empfangseinheiten denkbar, die sich auf beiden Seiten des Überwachungsbereichs befinden und in denen Lichtempfänger und Lichtsender jeweils alternierend angeordnet sind. Rein beispielhaft könnten dabei in der Ausführungsform aus Figur 2a und 2b die Lichtsender 14a mit den Lichtempfängern 26a ausgetauscht werden, oder auch jeweils jeder zweite Lichtsender 14a mit dem ihm zugeordneten Lichtempfänger 26a.

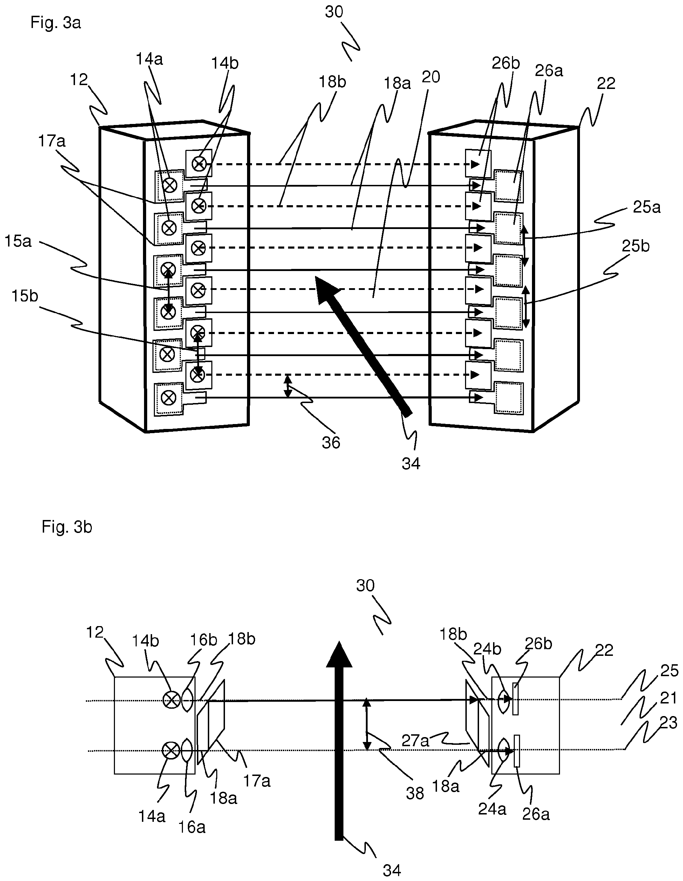

Figur 3a zeigt eine schematische, perspektivische Darstellung einer alternativen Ausführungsform eines erfindungsgemäßen Lichtgitters 10. Aus Gründen der Übersichtlichkeit wird hier sowie in den noch folgenden Ausführungsformen auf die Darstellung von Sendersteuerung und Auswertungseinheit verzichtet, da deren Funktionsweise aus der vorhergehenden Ausführungsform der Erfindung bekannt ist.

Im Unterschied zu der Ausführungsform aus Figur 2 weist das Lichtgitter 30 nur für die Überwachungslichtstrahlen 18a optische Umlenkelemente 17a auf, welche die Überwachungslichtstrahlen 18a in die zweite Ebene umlenken, in der die Lichtsender 14b und Lichtempfänger 26b angeordnet sind. Somit fällt die gemeinsame Überwachungsebene, die durch die Überwachungslichtstrahlen 18a, 18b gebildet wird, mit der zweiten Ebene zusammen. Empfängerseitig lenken die optischen Umlenkelemente 27a die Überwachungslichtstrahlen 18a auf die Lichtempfänger 26a.

Figur 3b zeigt eine Aufsicht des Lichtgitters 30 aus Figur 3a. Die Überwachungslichtstrahlen 18a werden durch die optischen Umlenkelemente 17a in die Ebene 25 der Überwachungslichtstrahlen 18a umgelenkt und durch die optischen Umlenkelemente 27a zurück auf Lichtempfänger 26a. Die gemeinsame Überwachungsebene fällt somit mit der zweiten Ebene 25 zusammen, in der die zweiten Lichtsender 14b und zweiten Lichtempfänger 26b angeordnet sind.

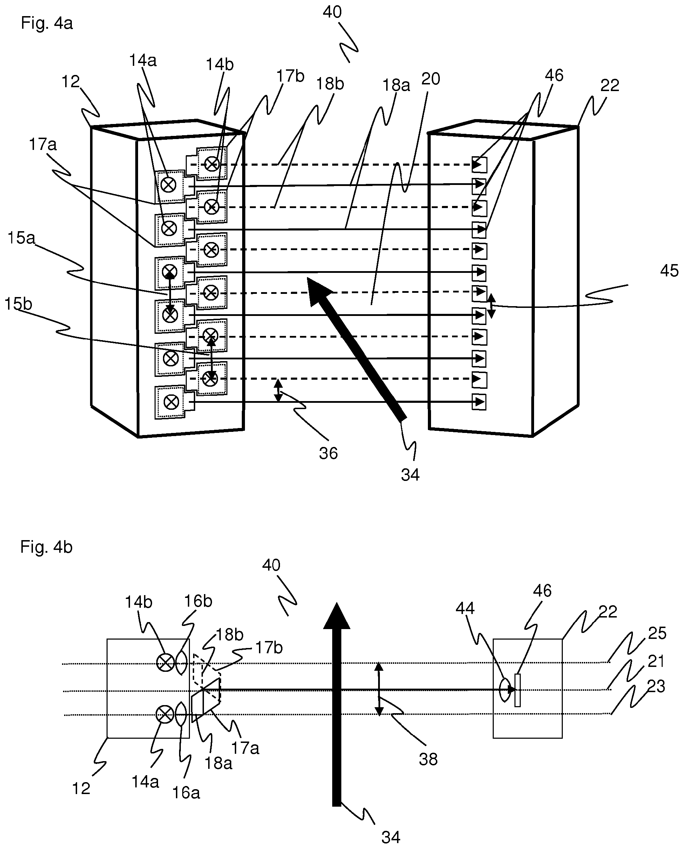

Figur 4a zeigt eine schematische, perspektivische Darstellung einer weiteren Ausführungsform eines erfindungsgemäßen Lichtgitters 40.

Im Unterschied zu der Ausführungsform aus Figur 2 weist das Lichtgitter in der Empfangseinheit 22 Lichtempfänger 46 auf, die aufgrund einer kleinen Grundfläche in einem Empfängerrasterabstand 45 angeordnet werden können, der kleiner als die Senderrasterabstände 15a, 15b. Eine versetzte Anordnung der Lichtempfänger 46 ist daher nicht nötig und die Lichtempfänger 46 liegen in der gemeinsamen Überwachungsebene.

Die Sendeeinheit 12 ist ausgelegt wie in der in Figur 2 gezeigten Ausführungsform. Da die Lichtempfänger 46 bereits in der gemeinsamen Überwachungsebene angeordnet sind, kann auf der Empfängerseite auf die optischen Umlenkelemente zur Umlenkung der Überwachungslichtstrahlen 18a, 18b verzichtet werden.

Figur 4b zeigt eine Aufsicht des Lichtgitters 40 aus Figur 4a. Wie in der in Figur 2 gezeigten Ausführungsform werden die Überwachungslichtstrahlen 18a, 18b durch die optischen Umlenkelemente 17a, 17b aus der ersten Ebene 23 und zweiten Ebene 25 in die gemeinsame Überwachungsebene 21 umgelenkt. Auf der Empfängerseite sind alle Lichtempfänger 46 in der gemeinsamen Überwachungsebene 21 angeordnet, so dass hier keine optischen Umlenkelemente zur Umlenkung der Überwachungslichtstrahlen 18a, 18b nötig sind.

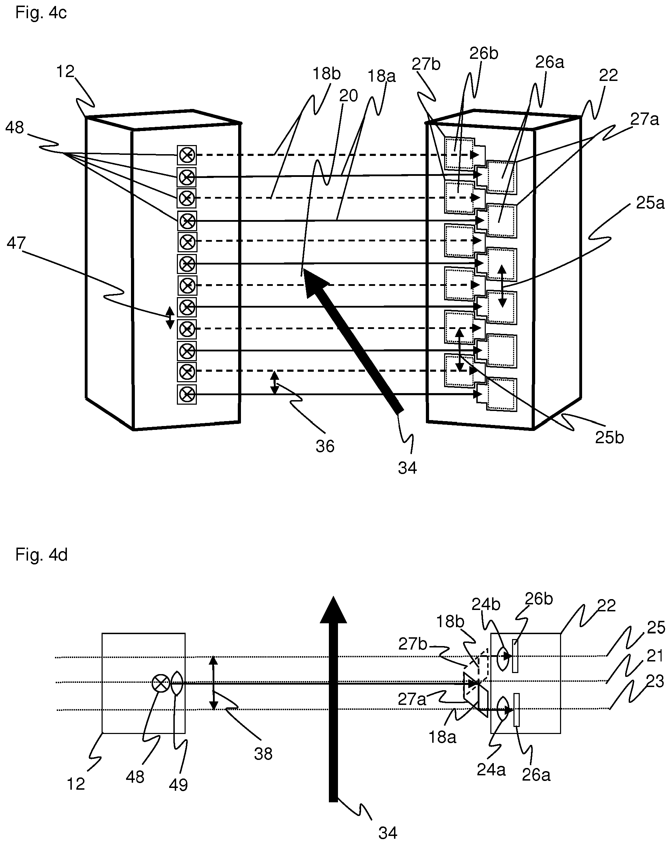

Die in den Figuren 4a und 4b gezeigte Ausführungsform lässt sich grundsätzlich auch derart abwandeln, dass Lichtsender und Lichtempfänger getauscht werden, sofern die Grundfläche der Lichtsender so klein ist, dass auf eine versetzte Anordnung der Lichtsender verzichtet werden kann, und die Lichtempfänger aufgrund ihrer Baugröße versetzt angeordnet werden müssen. Eine entsprechende Ausführungsform ist in den Figuren 4c und 4d gezeigt. Insbesondere sind hier eine Vielzahl Lichtsender 48 mit einem Senderrasterabstand 47 in der gemeinsamen Überwachungsebene 21 angeordnet und emittieren Überwachungslichtstrahlen 18a, 18b in die Überwachungsebene 21. Alternativ zu einer Vielzahl von Lichtsendern 48 könnte hier auch ein linienförmiger Lichtsender verwendet werden. In der Empfangseinheit 22 erfolgt die Umlenkung der Überwachungslichtstrahlen 18a, 18b auf die Lichtempfänger 26a, 26b analog zu der in den Figuren 2a und 2b gezeigten Ausführungsform.

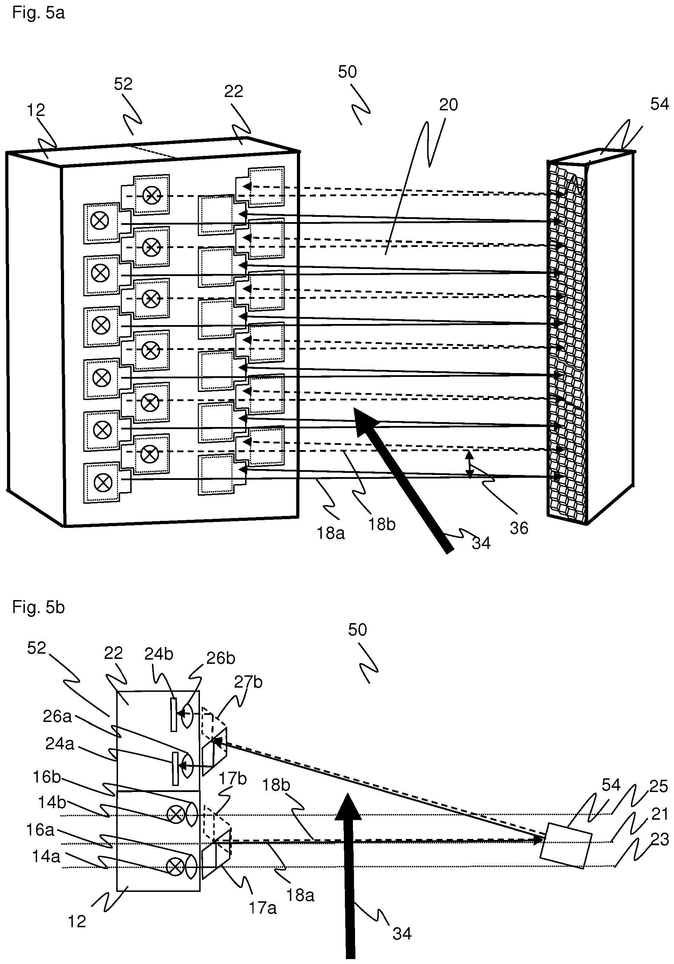

Figur 5a zeigt eine schematische, perspektivische Darstellung einer weiteren Ausführungsform eines erfindungsgemäßen Lichtgitters 50. Im Unterschied zu der Ausführungsform aus Figur 2 sind hier Sendeeinheit 12 und Empfangseinheit 22 auf derselben Seite des Überwachungsbereichs 20 angeordnet. Wie gezeigt können Sendeeinheit 12 und Empfangseinheit 22 in einem gemeinsamen Gehäuse 52 untergebracht sein. Die Überwachungslichtstrahlen 18a, 18b werden wie in der in Figur 2 gezeigten Ausführungsform in eine gemeinsame Überwachungsebene umgelenkt und gelangen in diesem Fall über einen Retroreflektor 54 zurück zur Empfangseinheit 22.

Figur 5b zeigt eine Aufsicht des Lichtgitters 50 aus Figur 5a.

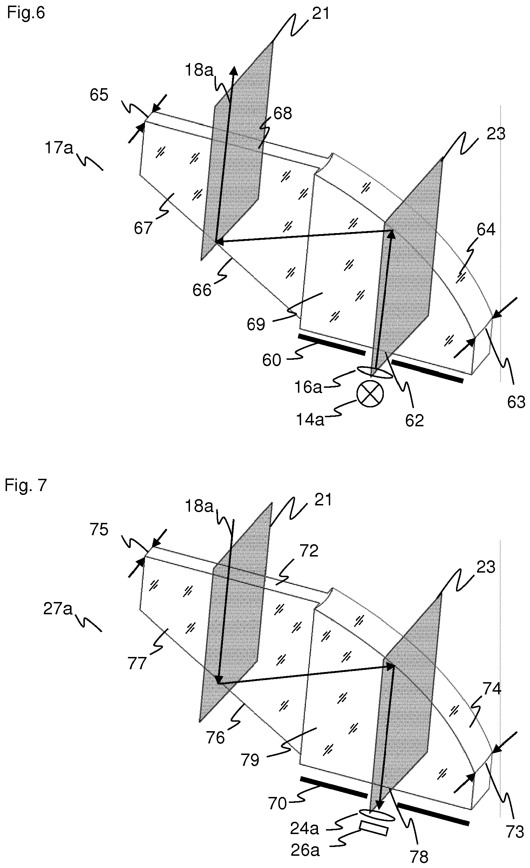

Figur 6 zeigt eine perspektivische Ansicht eines senderseitigen optischen Umlenkelements 17a zur Verwendung in einem Lichtgitter der beschriebenen Ausführungsformen der Erfindung.

Ein erster Lichtsender 14a, beispielsweise eine LED oder ein Laser im infraroten oder einem anderen Spektrum emittiert einen Überwachungslichtstrahl 18a, der durch eine (optionale) Sendeoptik 16a, eine (optionale) senderseitige Blende 60 und eine erste Eintrittsfläche 62, die im Wesentlichen senkrecht zur ersten Ebene 23 beziehungsweise zum Überwachungslichtstrahl 18a stehen kann, in das senderseitige optische Umlenkelement 17a eintritt.

Die senderseitige Blende 60 kann einen Sendewinkel des Lichtsenders 14a einschränken, so dass Umspiegelungseffekte vermieden werden und mehrere Überwachungslichtstrahlen 18a, 18b des Lichtgitters gleichzeitig aktiviert werden können. Übliche Blendendurchmesser können bevorzugt zwischen 0,5 mm und 1,5 mm betragen.

Der Überwachungslichtstrahl 18a wird an einer ersten verspiegelten Fläche 64 und an einer zweiten verspiegelten Fläche 66 reflektiert und so durch eine erste Austrittsfläche 68, die im Wesentlichen senkrecht zur gemeinsame Überwachungsebene 21 beziehungsweise zum Überwachungslichtstrahl 18a stehen kann, in die gemeinsame Überwachungsebene 21 umgelenkt.

Die erste und/oder zweite verspiegelte Fläche 64, 66 können als gekrümmte Flächen ausgeführt sein, vorzugsweise mit einer paraboloiden Form. Die erste Eintrittsfläche 62 und die erste Austrittsfläche 68 können ebenfalls als gekrümmte Flächen ausgeführt sein. Somit kann das senderseitige optische Umlenkelement 17a zur Strahlformung des Überwachungslichtstrahls 18 verwendet werden.

Das senderseitige optische Umlenkelement 17a kann im Bereich der ersten Ebene 23 eine erste Breite 63, also eine Ausdehnung parallel zur ersten Ebene 23, aufweisen, die im Wesentlichen einer Breite einer Grundfläche des Lichtsenders 14a entspricht, bevorzugt etwas geringer ist. Übliche Breiten einer Grundfläche des Lichtsenders 14a liegen bei bis zu 5mm, bevorzugt bei bis zu 2mm.

Im Bereich der gemeinsamen Überwachungsebene 21 kann das senderseitige optische Umlenkelement 17a eine zweite Breite 65, also eine Ausdehnung parallel zur gemeinsamen Überwachungsebene 21, aufweisen, die kleiner ist als die erste Breite 63, bevorzugt weniger als halb so breit ist. Die Verringerung der Breite des senderseitigen optischen Umlenkelements 17a kann stufenförmig in der Mitte des senderseitigen optischen Umlenkelement 17a erfolgen.

Die Seitenwände 67, 69 des senderseitigen optischen Umlenkelements 17a, die im Wesentlichen senkrecht zur Eintrittsfläche 62, zur Austrittsfläche 68, zur ersten Ebene 23 und zur gemeinsamen Überwachungsebene 21 angeordnet sein können, können zur Vermeidung von Streulicht mit einer Licht absorbierenden Beschichtung (Mattierung) versehen sein.

Figur 7 zeigt eine perspektivische Ansicht eines empfängerseitigen optischen Umlenkelements 27a zur Verwendung in einem Lichtgitter der beschriebenen Ausführungsformen der Erfindung.

Ein Überwachungslichtstrahl 18a tritt in der gemeinsamen Überwachungsebene 21 durch eine zweite Eintrittsfläche 72, die im Wesentlichen senkrecht zur gemeinsamen Überwachungsebene 21 beziehungsweise zum Überwachungslichtstrahl 18a stehen kann, in das empfängerseitige optische Umlenkelement 27a ein, und wird an einer dritten verspiegelten Fläche 74 und einer vierten verspiegelten Fläche 76 in Richtung Lichtempfänger 26a reflektiert.

Im Bereich einer zweiten Austrittsfläche 78, die im Wesentlichen senkrecht zur ersten Ebene 23 beziehungswiese zum Überwachungslichtstrahl 18a stehen kann, kann eine empfängerseitige Blende 70 angeordnet sein. Die empfängerseitige Blende 70 kann einen Sichtbereich des Lichtempfängers 24a einschränken, so dass Umspiegelungseffekte vermieden werden und mehrere Überwachungslichtstrahlen 18a, 18b des Lichtgitters gleichzeitig aktiviert werden können. Übliche Blendendurchmesser können bevorzugt zwischen 0,5 mm und 1,5 mm betragen.

Die dritte und/oder vierte verspiegelte Fläche 74, 76 können als gekrümmte Flächen ausgeführt sein, vorzugswiese mit einer paraboloiden Form. Die zweite Eintrittsfläche 72 und die zweite Austrittsfläche 78 können ebenfalls als gekrümmte Flächen ausgeführt sein. Somit kann das empfängerseitige optische Umlenkelement 27a zur Strahlformung des Überwachungslichtstrahls 18a verwendet werden.

Das empfängerseitige optische Umlenkelement 27a kann im Bereich der ersten Ebene 23 eine dritte Breite 73, also eine Ausdehnung parallel zur ersten Ebene 23, aufweisen, die im Wesentlichen einer Breite einer Grundfläche des Lichtempfängers 26a entspricht, bevorzugt etwas geringer ist. Übliche Breiten einer Grundfläche des Lichtempfängers 26a liegen bei bis zu 5mm, bevorzugt bei bis zu 2mm.

Im Bereich der gemeinsamen Überwachungsebene 21 kann das empfängerseitige optische Umlenkelement 27a eine vierte Breite 75, also eine Ausdehnung parallel zur Überwachungsebene 21, aufweisen, die kleiner ist als die dritte Breite 73, bevorzugt weniger als halb so breit ist. Die Verringerung der Breite kann stufenförmig in der Mitte des empfängerseitigen optischen Umlenkelements 27a erfolgen.

Die Seitenwände 77, 79 des empfängerseitigen optischen Umlenkelements 27a, die im Wesentlichen senkrecht zur Eintrittsfläche 72, zur Austrittsfläche 78, zur ersten Ebene 23 und zur gemeinsamen Überwachungsebene 21 angeordnet sein können, können zur Vermeidung von Streulicht mit einer Licht absorbierenden Beschichtung (Mattierung) versehen sein. Überraschenderwiese wurde jedoch festgestellt, dass auch ohne Beschichtung der Seitenwände 77, 79 ein Übersprechen der Überwachungslichtstrahlen 18a auf benachbarte Überwachungslichtstrahlen effizient unterdrückt wird.

Die in Figur 6 und Figur 7 gezeigten optischen Umlenkelemente 17a, 27a können dieselben optischen und geometrischen Eigenschaften aufweisen, so dass sender- und empfängerseitig die gleichen Bauteile zum Umlenken der Überwachungslichtstrahlen verwendet werden können.

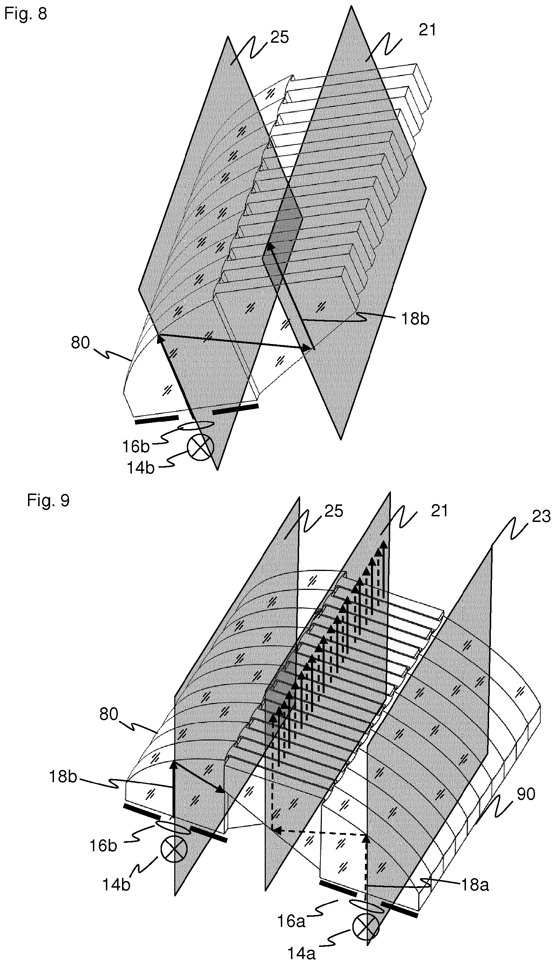

Figur 8 zeigt eine perspektivische Ansicht eines senderseitigen optischen Umlenkelements als Modul 80, in diesem Fall für zehn zweite Lichtsender 14b. Das Modul 80 kann aus einzelnen optischen Umlenkelementen zusammengesetzt oder aus einem Stück gefertigt sein. Im Bereich der gemeinsamen Überwachungsebene 21 weist das Modul 80 eine kammartige Struktur auf, da die optischen Umlenkelemente im Bereich der gemeinsamen Überwachungsebene 21 kleinere Grundflächen aufweisen als im Bereich der zweiten Lichtsender 14b, also im Bereich der zweiten Ebene 23.

Figur 9 zeigt eine perspektivische Ansicht eines ersten Moduls 90 mit senderseitigen optischen Umlenkelementen für zehn erste Lichtsender 14a, welches verschachtelt zu einem zweiten Modul 80 mit senderseitigen optischen Umlenkelementen für zehn zweite Lichtsender 14b angeordnet ist. Das erste Modul 90 lenkt die Überwachungslichtstrahlen 18a aus den Lichtsendern 14a aus der ersten Ebene 23 in die gemeinsame Überwachungsebene 21 ab, das zweite Modul 80 lenkt die Überwachungslichtstrahlen 18b aus den zweiten Lichtsendern 14b aus der zweiten Ebene 25 in die gemeinsame Überwachungsebene 21 ab. Die verschachtelte Anordnung der Module 80, 90 ist möglich, da die Module 80, 90 im Bereich der gemeinsamen Überwachungsebene 21 jeweils eine kammartige Struktur aufweisen, da die optischen Umlenkelemente wie in Figur 6 beschrieben im Bereich der gemeinsamen Überwachungsebene 21 geringere Breiten aufweisen als im Bereich der Lichtsender 14a, 14b, also im Bereich der ersten Ebene 23 und der zweiten Ebene 25.

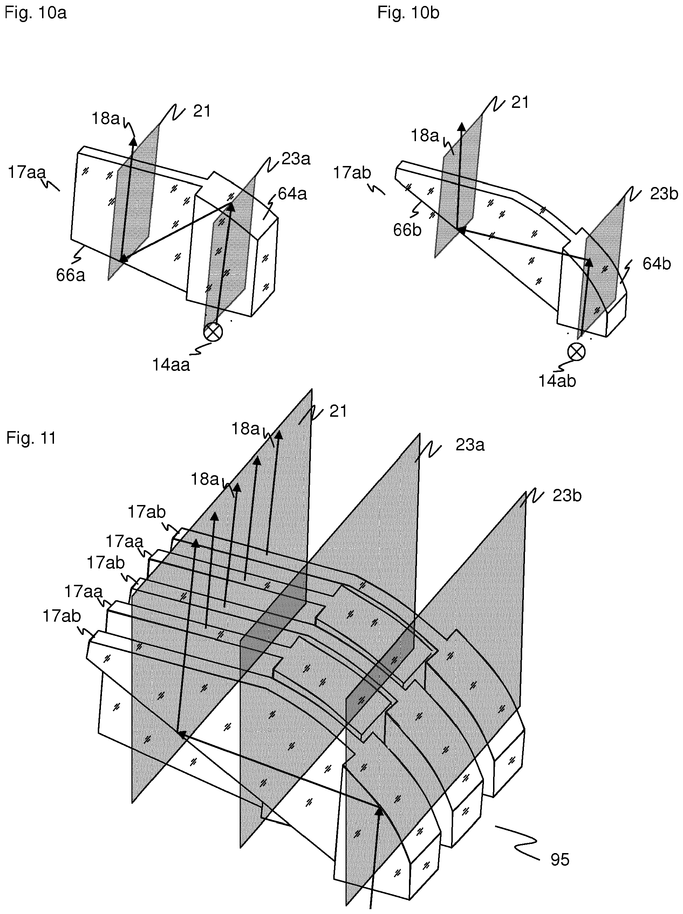

Figur 10a und 10b zeigen alternative optische Umlenkelemente 17aa, 17ab zum Umlenken von Überwachungslichtstrahlen 18a aus ersten Ebenen 23a und 23b in die gemeinsame Überwachungsebene 21, wobei die Ebene 23a in einem geringeren Abstand zur gemeinsamen Überwachungsebene 21 liegt als die Ebene 23b. Die reflektierenden Flächen 66a der optischen Umlenkelemente 17aa sind daher kürzer dimensioniert als die reflektierenden Flächen 66b der optischen Umlenkelemente 17aa. Somit lassen sich die optischen Umlenkelemente 17aa und 17ab zur Umlenkung der Überwachungslichtstrahlen 18a aus den Ebenen 23a und 23b in die gemeinsame Überwachungsebene 21 alternierend nebeneinander anordnen.

Bei der in Figur 10a und 10b gezeigten Ausgestaltung der optische Umlenkelemente 17aa, 17ab, kann ein größerer Bereich der reflektierenden Flächen 64a, 64b genutzt werden als bei den optischen Umlenkelemente 17a, 17a aus den vorherigen Ausführungsbeispielen. Damit lassen sich die Überwachungslichtstrahlen 18a besser fokussieren und die Signaltrennung zwischen den Lichtsendern 14aa, 14ab und Lichtempfängern (nicht gezeigt) weiter verbessern

Figur 11 zeigt die alternierende Anordnung der optische Umlenkelemente 17aa, 17ab zur Umlenkung der Überwachungslichtstrahlen 18a aus den ersten Ebenen 23a und 23b in die gemeinsame Überwachungsebene 21 beispielhaft als Modul 95 aus fünf Einzelelementen. Da auch dieses Modul 95 im Bereich der gemeinsamen Überwachungsebene 21 eine kammartige Struktur aufweist, lässt es sich ähnlich wie in Figur 9 gezeigt mit einem weiteren Modul aus identischen Umlenkelementen 17aa, 17ab verschachtelt anordnen. Mit einer solchen Anordnung können Überwachungslichtstrahlen aus 4 parallelen Ebenen in eine gemeinsame Überwachungsebene umgelenkt werden.

## Patentansprüche

1. Lichtgitter (10, 30, 40, 50) mit einer Vielzahl von in einer ersten Ebene (23) mit einem ersten Senderrasterabstand (15a) angeordneten ersten Lichtsendern (14a) zum Emittieren von ersten Überwachungslichtstrahlen (18a) in die erste Ebene (23) und einer Vielzahl von in einer zweiten Ebene (25) mit einem zweiten Senderrasterabstand (15b) angeordneten zweiten Lichtsendern (14b) zum Emittieren von zweiten Überwachungslichtstrahlen (18b) in die zweite Ebene (25), mit einer Vielzahl von den ersten Lichtsendern (14a) zugeordneten, in einem ersten Empfängerrasterabstand (25a) angeordneten ersten Lichtempfängern (26a) und einer Vielzahl von den zweiten Lichtsendern (14b) zugeordneten, in einem zweiten Empfängerrasterabstand (25b) angeordneten zweiten Lichtempfängern (26b), wobei die erste Ebene (23) und die zweite Ebene (25) parallel zueinander sind und einen Abstand (38) aufweisen und die ersten Lichtsender (14a) und die zweiten Lichtsender (14b) senkrecht zu einer Flächennormalen der ersten Ebene (23) und der zweiten Ebene (25) sowie senkrecht zu einer Ausbreitungsrichtung der ersten Überwachungslichtstrahlen (18a) und der zweiten Überwachungslichtstrahlen (18b) versetzt zueinander angeordnet sind,
**dadurch gekennzeichnet,**
**dass** den ersten Lichtsendern (14a) wenigstens ein erstes senderseitiges optisches Umlenkelement (17a) zugeordnet ist und/oder den zweiten Lichtsendern (14b) wenigstens ein zweites senderseitiges optisches Umlenkelement (17b) zugeordnet ist, wobei die senderseitigen optischen Umlenkelemente (17a, 17b) zum Umlenken der ersten und/oder der zweiten Überwachungslichtstrahlen (18a, 18b) in eine gemeinsame Überwachungsebene (21) ausgebildet sind, und wobei ein Überwachungsrasterabstand (36) der Überwachungslichtstrahlen (18a, 18b) kleiner ist als der erste und/oder der zweite Senderrasterabstand (15a, 15b).

2. Lichtgitter (10, 30, 40, 50) mit einer Vielzahl von in einer ersten Ebene (23) mit einem ersten Empfängerrasterabstand (25a) angeordneten ersten Lichtempfängern (26a) zum Empfangen von ersten Überwachungslichtstrahlen (18a) und einer Vielzahl von in einer zweiten Ebene (25) mit einem zweiten Empfängerrasterabstand (25b) angeordneten zweiten Lichtempfängern (26b) zum Empfangen von zweiten Überwachungslichtstrahlen (18b), mit einer Vielzahl von den ersten Lichtempfängern (26a) und den zweiten Lichtempfängern (26b) zugeordneten, in einem Senderrasterabstand (47) angeordneten Lichtsendern (48), wobei die erste Ebene (23) und die zweite Ebene (25) parallel zueinander sind und einen Abstand (38) aufweisen und die ersten Lichtempfänger (26a) und die zweiten Lichtempfänger (26b) senkrecht zu einer Flächennormalen der ersten Ebene (23) und der zweiten Ebene (25) sowie senkrecht zu einer Ausbreitungsrichtung der ersten Überwachungslichtstrahlen (18a) und der zweiten Überwachungslichtstrahlen (18b) versetzt zueinander angeordnet sind,
**dadurch gekennzeichnet,**
**dass** den ersten Lichtempfängern (26a) wenigstens ein erstes empfängerseitiges optisches Umlenkelement (27a) zugeordnet ist und/oder den zweiten Lichtempfängern (26b) wenigstens ein zweites empfängerseitiges optisches Umlenkelement (27b) zugeordnet ist, wobei die empfängerseitigen optischen Umlenkelemente (27a, 27b) zum Umlenken der ersten und/oder der zweiten Überwachungslichtstrahlen (18a, 18b) aus der gemeinsamen Überwachungsebene (21) in die erste Ebene (23) und/oder die zweite Ebene (25) ausgebildet sind, und wobei ein Überwachungsrasterabstand (36) der Überwachungslichtstrahlen (18a, 18b) kleiner ist als der erste und/oder der zweite Empfängerrasterabstand (25a, 25b).

3. Lichtgitter (10,30) nach Anspruch 1, wobei die ersten Lichtempfänger (26a) in der ersten Ebene (23) angeordnet sind und die zweiten Lichtempfänger (26b) in der zweiten Ebene (25) angeordnet sind, wobei den ersten Lichtempfängern (26a) wenigstens ein erstes empfängerseitiges optisches Umlenkelement (27a) und/oder den zweiten Lichtempfängern (26b) wenigstens ein zweites empfängerseitiges optisches Umlenkelement (27b) zum Umlenken der ersten Überwachungslichtstrahlen (18a) und/oder der zweiten Überwachungslichtstrahlen (18b) aus der gemeinsamen Überwachungsebene (21) in die erste Ebene (23) und/oder die zweite Ebene (25) zugeordnet ist.

4. Lichtgitter (40) nach Anspruch 1, wobei die ersten Lichtempfänger (26a) und die zweiten Lichtempfänger (26b) in der gemeinsamen Überwachungsebene (21) angeordnet sind.

5. Lichtgitter (10, 30, 40, 50) nach einem der Ansprüche 1 bis 3, wobei das Lichtgitter (10, 30, 40, 50) einen Reflektor, insbesondere einen Retroreflektor (54), zum Reflektieren der Überwachungslichtstrahlen (18a, 18b) von den Lichtsendern (14a, 14b) zu den Lichtempfängern (26a, 26b) aufweist.

6. Lichtgitter (10, 30, 40, 50) nach einem der Ansprüche 1, 3 oder 4, wobei der erste Senderrasterabstand (15a) und der zweite Senderrasterabstand (15b) gleich groß sind.

7. Lichtgitter (10, 30, 40, 50) nach einem der Ansprüche 1, 3 oder 4, wobei jedem Lichtsender (14a, 14b) ein eigenes optisches Umlenkelement (17a, 17b) zugeordnet ist oder mehreren Lichtsendern (14a, 14b) ein Modul (80, 90) mit mehreren optischen Umlenkelementen (17a, 17b) zugeordnet ist.

8. Lichtgitter (10, 30, 40, 50) nach einem der Ansprüche 1 bis 7, wobei wenigstens ein optisches Umlenkelement (17a, 17b, 27a, 27b) wenigstens eine verspiegelte Fläche (64, 66, 74, 76) aufweist.

9. Lichtgitter (10, 30, 40, 50) nach einem der Ansprüche 1 bis 8, wobei wenigstens ein optisches Umlenkelement (17a, 17b, 27a, 27b) wenigstens eine gekrümmte Fläche (64, 74) aufweist.

10. Lichtgitter (10, 30, 40, 50) nach Anspruch 9, wobei das optische Umlenkelement ein empfängerseitiges optisches Umlenkelement (27a, 27b) ist und wenigstens eine gekrümmte Fläche (64, 74) zur Fokussierung der Überwachungslichtstrahlen (18a, 18b) auf die Lichtempfänger (26a, 26b) eingerichtet ist.

11. Lichtgitter (10, 30, 40, 50) nach einem der Ansprüche 1 bis 10, wobei wenigstens ein optisches Umlenkelement (17a, 17b, 27a, 27b) eine Blende (60, 70) aufweist.

12. Lichtgitter (10, 30, 40, 50) nach Anspruch 11, wobei das optische Umlenkelement ein empfängerseitiges optisches Umlenkelement (27a, 27b) ist und die Blende (70) zur Einschränkung eines Empfangswinkes eines Lichtempfängers (26a, 26b) eingerichtet ist.

13. Lichtgitter (10, 30, 40, 50) nach einem der vorhergehenden Ansprüche, wobei die optischen Umlenkelemente (17a, 17b, 27a, 27b) zumindest teilweise zur Umlenkung der Überwachungslichtstrahlen (18a, 18b) aufgrund von Totalreflexion ausgebildet sind.

14. Lichtgitter (10, 30, 40, 50) nach einem der vorhergehenden Ansprüche, wobei die optischen Umlenkelemente (17a, 17b, 27a, 27b) im Bereich der gemeinsamen Überwachungsebene (21) eine erste Breite 65, 75 aufwiesen, die geringer ist als eine zweite Breite 63, 73 der optischen Umlenkelemente (17a, 17b, 27a, 27b) im Bereich der ersten und/oder der zweiten Ebene 23, 25, wobei die erste Breite höchstens halb so groß ist wie die zweite Breite.

15. Verfahren zum Erfassen von Objekten mit einem Lichtgitter (10, 30, 40, 50) das die folgenden Schritte aufweist:
- Aussenden von ersten, in einem ersten Rasterabstand (15a) beabstandeten Überwachungslichtstrahlen (18a) in einer ersten Ebene (23),
- Aussenden von zweiten, in einem zweiten Rasterabstand (15b) beabstandeten Überwachungslichtstrahlen (18b) in einer zweiten Ebene (25),
- wobei die erste Ebene (23) und zweite Ebene (25) parallel zueinander sind,
- Detektieren der ersten und zweiten Überwachungslichtstrahlen.
**dadurch gekennzeichnet, dass** das Verfahren zusätzlich die folgenden Schritte aufweist
- Umlenken der ersten und zweiten Überwachungslichtstrahlen (18a, 18b) in eine gemeinsame Überwachungsebene (21),
- wobei die ersten und zweiten Überwachungslichtstrahlen (18a, 18b) in der gemeinsamen Überwachungsebene (21) einen Überwachungsrasterabstand (36) zueinander aufweisen, der kleiner ist als der erste Rasterabstand (15a) und/oder der zweite Rasterabstand (15b).

## Claims

1. Light grid (10, 30, 40, 50) comprising a plurality of first light emitters (14a) arranged in a first plane (23) with a first emitter raster spacing (15a) for emitting first monitoring light beams (18a) into the first plane (23) and a plurality of second light emitters (14b) arranged in a second plane (25) with a second emitter raster spacing (15b) for emitting second monitoring light beams (18b) into the second plane (25), a plurality of first light receivers (26a) associated with the first light emitters (14a) and arranged at a first receiver raster spacing (25a) and a plurality of second light emitters (14b) associated with the second light receivers (26b) arranged at a second receiver raster spacing (25b), the first plane (23) and the second plane (25) being parallel to one another and having a distance (38), and the first light emitters (14a) and the second light emitters (14b) being arranged offset with respect to one another perpendicularly to a surface normal of the first plane (23) and of the second plane (25) and perpendicularly to a propagation direction of the first monitoring light beams (18a) and of the second monitoring light beams (18b)
**characterized in**
**that** at least one first emitter-side optical deflection element (17a) is assigned to the first light emitters (14a) and/or at least one second emitter-side optical deflection element (17b) is assigned to the second light emitters (14b), the emitter-side optical deflection elements (17a, 17b) being designed for deflecting the first and/or the second monitoring light beams (18a, 18b) into a common monitoring plane (21), and a monitoring raster spacing (36) of the monitoring light beams (18a, 18b) being smaller than the first and/or the second emitter raster spacing (15a, 15b).

2. Light grid (10, 30, 40, 50) comprising a plurality of first light receivers (26a) arranged in a first plane (23) with a first receiver raster spacing (25a) for receiving first monitoring light beams (18a) and a plurality of second light receivers (26a) arranged in a second plane (25) with a second receiver raster spacing (25b) for receiving second monitoring light beams (18b), with a plurality of light emitters (48) arranged at a emitter raster spacing (47) and associated with the first light receivers (26a) and the second light receivers (26b), the first plane (23) and the second plane (25) being parallel to one another and having a distance (38), and the first light receivers (26a) and the second light receivers (26b) being arranged offset with respect to one another perpendicularly to a surface normal of the first plane (23) and of the second plane (25) and perpendicularly to a propagation direction of the first monitoring light beams (18a) and of the second monitoring light beams (18b)
**characterized in that**
at least one first receiver-side optical deflection element (27a) is assigned to the first light receivers (26a) and/or at least one second receiver-side optical deflection element (27b) is assigned to the second light receivers (26b), the receiver-side optical deflection elements (27a, 27b) being designed for deflecting the first and/or the second monitoring light beams (18a, 18b) from the common monitoring plane (21) into the first plane (23) and/or the second plane (25), and a monitoring raster spacing (36) of the monitoring light beams (18a, 18b) being smaller than the first and/or the second receiver raster spacing (25a, 25b).

3. Light grid (10, 30) according to claim 1, wherein the first light receivers (26a) are arranged in the first plane (23) and the second light receivers (26b) are arranged in the second plane (25), wherein the first light receivers (26a) are associated with at least one first receiver-side optical deflection element (27a) and/or the second light receivers (26b) are associated with at least one second receiver-side optical deflection element (27b) for deflecting the first monitoring light beams (18a) and/or the second monitoring light beams (18b) from the common monitoring plane (21) into the first plane (23) and/or the second plane (25).

4. Light grid (40) according to claim 1, wherein the first light receivers (26a) and the second light receivers (26b) are arranged in the common monitoring plane (21).

5. Light grid (10, 30, 40, 50) according to any one of claims 1 to 3, wherein the light grid (10, 30, 40, 50) comprises a reflector, in particular a retroreflector (54), for reflecting the monitoring light beams (18a, 18b) from the light emitters (14a, 14b) to the light receivers (26a, 26b).

6. Light grid (10, 30, 40, 50) of any one of claims 1, 3 or 4, wherein the first emitter raster spacing (15a) and the second emitter raster spacing (15b) are equal.

7. Light grid (10, 30, 40, 50) according to one of claims 1, 3 or 4, wherein each light emitter (14a, 14b) is assigned its own optical deflection element (17a, 17b) or a plurality of light emitters (14a, 14b) are assigned to a module (80, 90) with a plurality of optical deflection elements (17a, 17b).

8. Light grid (10, 30, 40, 50) of any one of claims 1 to 7, wherein at least one optical deflection element (17a, 17b, 27a, 27b) comprises at least one mirrored surface (64, 66, 74, 76).

9. Light grid (10, 30, 40, 50) according to any one of claims 1 to 8, wherein at least one optical deflection element (17a, 17b, 27a, 27b) has at least one curved surface (64, 74).

10. Light grid (10, 30, 40, 50) according to claim 9, wherein the optical deflection element is a receiver-side optical deflection element (27a, 27b) and at least one curved surface (64, 74) is arranged for focusing the monitoring light beams (18a, 18b) onto the light receivers (26a, 26b).

11. Light grid (10, 30, 40, 50) of any one of claims 1 to 10, wherein at least one optical deflection element (17a, 17b, 27a, 27b) comprises an aperture (60, 70).

12. Light grid (10, 30, 40, 50) according to claim 11, wherein the optical deflection element is a receiver-side optical deflection element (27a, 27b) and the aperture (70) is arranged to restrict a reception angle of a light receiver (26a, 26b).

13. Light grid (10, 30, 40, 50) according to any one of the preceding claims, wherein the optical deflection elements (17a, 17b, 27a, 27b) are designed at least partially to deflect the monitoring light beams (18a, 18b) due to total reflection.

14. Light grid (10, 30, 40, 50) according to any one of the preceding claims, wherein the optical deflection elements (17a, 17b, 27a, 27b) in the region of the common monitoring plane (21) have a first width 65, 75 which is smaller than a second width 63, 73 of the optical deflection elements (17a, 17b, 27a, 27b) in the region of the first and/or the second plane 23, 25, wherein the first width is at most half as large as the second width.

15. A method of detecting objects with a light grid (10, 30, 40, 50) comprising the steps of:
- emitting first monitoring light beams (18a) spaced at a first raster spacing (15a) in a first plane (23),
- emitting second monitoring light beams (18b) spaced at a second raster spacing (15b) in a second plane (25),
- wherein the first plane (23) and second plane (25) are parallel to each other,
- detecting the first and second monitoring light beams.
**characterized in that** the method additionally comprises the steps of
- redirecting the first and second monitoring light beams (18a, 18b) into a common monitoring plane (21),
- wherein the first and second monitoring light beams (18a, 18b) have a monitoring raster spacing (36) from each other in the common monitoring plane (21) that is smaller than the first raster spacing (15a) and/or the second raster spacing (15b).

## Revendications

1. Grille lumineuse (10, 30, 40, 50) comprenant une pluralité de premiers émetteurs de lumière (14a) disposés dans un premier plan (23) avec un premier espacement de trame d'émetteur (15a) pour émettre des premiers rayons lumineux de surveillance (18a) dans le premier plan (23) et une pluralité de seconds émetteurs de lumière (14b) disposés dans un second plan (25) avec un second espacement des trame d'émetteur (15b) pour émettre des seconds rayons lumineux de surveillance (18b) dans le second plan (25), une pluralité de premiers récepteurs de lumière (26a) associés aux premiers émetteurs de lumière (14a) et disposés à un premier espacement de trame de récepteur (25a) et une pluralité de seconds récepteurs de lumière (26b) associés aux seconds émetteurs de lumière (14b), des seconds récepteurs de lumière (26b) disposés à un second espacement de trame de récepteur (25b), le premier plan (23) et le second plan (25) étant parallèles l'un à l'autre et présentant une distance (38), et les premiers émetteurs de lumière (14a) et les seconds émetteurs de lumière (14b) étant disposés de manière décalée les uns par rapport aux autres, perpendiculairement à une normale à la surface du premier plan (23) et du second plan (25) et perpendiculairement à une direction de propagation des premiers rayons lumineux de surveillance (18a) et des seconds rayons lumineux de surveillance (18b)
**caractérisé en ce que**
au moins un premier élément de déviation optique côté émetteur (17a) est associé aux premiers émetteurs de lumière (14a) et/ou au moins un second élément de déviation optique côté émetteur (17b) est associé aux seconds émetteurs de lumière (14b), les éléments de déviation optique côté émetteur (17a, 17b) sont conçus pour dévier le premier et/ou le second rayon lumineux de surveillance (18a, 18b) dans un plan de surveillance commun (21), et un espacement des trame de surveillance (36) des rayons lumineux de surveillance (18a, 18b) est inférieur au premier et/ou au second espacement des trames d'émetteur (15a, 15b).

2. Grille lumineuse (10, 30, 40, 50) comprenant une pluralité de premiers récepteurs de lumière (26a) disposés dans un premier plan (23) avec un premier espacement des trames de récepteur (25a) pour recevoir des premiers rayons lumineux de surveillance (18a) et une pluralité de seconds récepteurs de lumière (26a) disposés dans un second plan (25) avec un second espacement des trames de récepteur (25b) pour recevoir des seconds rayons lumineux de surveillance (18b), avec une pluralité d'émetteurs de lumière (48) disposés à un espacement des trames d'émetteur (47) et associés aux premiers récepteurs de lumière (26a) et aux seconds récepteurs de lumière (26b), le premier plan (23) et le second plan (25) sont parallèles l'un à l'autre et présentent une distance (38), et les premiers récepteurs de lumière (26a) et les seconds récepteurs de lumière (26b) sont disposés de manière décalée les uns par rapport aux autres, perpendiculairement à une normale à la surface du premier plan (23) et du second plan (25) et perpendiculairement à une direction de propagation des premiers rayons lumineux de contrôle (18a) et des seconds rayons lumineux de contrôle (18b)
**caractérisé en ce que**
au moins un premier élément de déviation optique côté récepteur (27a) est associé aux premiers récepteurs de lumière (26a) et/ou au moins un second élément de déviation optique côté récepteur (27b) est associé aux seconds récepteurs de lumière (26b), les éléments de déviation optique côté récepteur (27a, 27b) sont conçus pour dévier le premier et/ou le second rayon lumineux de surveillance (18a, 18b) du plan de surveillance commun (21) dans le premier plan (23) et/ou le second plan (25), et un espacement des trames de surveillance (36) des rayons lumineux de surveillance (18a, 18b) est inférieur au premier et/ou au second espacement des trame de récepteur (25a, 25b)

3. Grille lumineuse (10, 30) selon la revendication 1, dans laquelle les premiers récepteurs de lumière (26a) sont disposés dans le premier plan (23) et les seconds récepteurs de lumière (26b) sont disposés dans le second plan (25), les premiers récepteurs de lumière (26a) étant associés à au moins un premier élément de déviation optique côté récepteur(27a) et/ou les seconds récepteurs de lumière (26b) étant associés à au moins un second élément de déviation optique côté récepteur (27b) pour dévier les premiers rayons lumineux de surveillance (18a) et/ou les seconds rayons lumineux de surveillance (18b) du plan de surveillance commun (21) dans le premier plan (23) et/ou le second plan (25).

4. Grille lumineuse (40) selon la revendication 1, dans laquelle les premiers récepteurs de lumière (26a) et les seconds récepteurs de lumière (26b) sont disposés dans le plan de surveillance commun (21).

5. Grille lumineuse (10, 30, 40, 50) selon l'une des revendications 1 à 3, dans laquelle la Grille lumineuse (10, 30, 40, 50) comprend un réflecteur, en particulier un rétroréflecteur (54), pour réfléchir les rayons lumineux de surveillance (18a, 18b) des émetteurs de lumière (14a, 14b) vers les récepteurs de lumière (26a, 26b).

6. Grille lumineuse (10, 30, 40, 50) selon l'une des revendications 1, 3 ou 4 dans laquelle le premier espacement de trame d'émetteur (15a) et le second espacement de trame d'émetteur (15b) sont égaux.

7. Grille lumineuse (10, 30, 40, 50) selon l'une des revendications 1, 3 ou 4, dans laquelle chaque émetteur de lumière (14a, 14b) est associé à son propre élément de déviation optique (17a, 17b) ou plusieurs émetteurs de lumière (14a, 14b) sont associés à un module (80, 90) avec plusieurs éléments de déviation optique (17a, 17b).

8. Grille lumineuse (10, 30, 40, 50) selon l'une des revendications 1 à 7dans laquelle au moins un élément de déviation optique (17a, 17b, 27a, 27b) comprend au moins une surface réfléchissante (64, 66, 74, 76).

9. Grille lumineuse (10, 30, 40, 50) selon l'une des revendications 1 à 8dans laquelle au moins un élément de déviation optique (17a, 17b, 27a, 27b) présente au moins une surface courbe (64, 74).

10. Grille lumineuse (10, 30, 40, 50) selon la revendication 9dans laquelle l'élément de déviation optique est un élément de déviation optique côté récepteur (27a, 27b) et au moins une surface incurvée (64, 74) est disposée pour focaliser les rayons lumineux de surveillance (18a, 18b) sur les récepteurs de lumière (26a, 26b).

11. Grille lumineuse (10, 30, 40, 50) selon l'une des revendications 1 à 10dans laquelle au moins un élément de déviation optique (17a, 17b, 27a, 27b) comprend une ouverture (60, 70).

12. Grille lumineuse (10, 30, 40, 50) selon la revendication 11dans laquelle l'élément de déviation optique est un élément de déviation optique côté récepteur (27a, 27b) et l'ouverture (70) est agencée pour restreindre un angle de réception d'un récepteur de lumière (26a, 26b).

13. Grille lumineuse (10, 30, 40, 50) selon l'une des revendications précédentes, dans laquelle les éléments de déviation optiques (17a, 17b, 27a, 27b) sont conçus pour dévier au moins partiellement les rayons lumineux de surveillance (18a, 18b) par réflexion totale.

14. Grille lumineuse (10, 30, 40, 50) selon l'une des revendications précédentes, dans laquelle les éléments de déviation optique (17a, 17b, 27a, 27b) dans la zone du plan de surveillance commun (21) présentent une première largeur 65, 75 qui est inférieure à une seconde largeur 63, 73 des éléments de déviation optique (17a, 17b, 27a, 27b) dans la zone du premier et/ou du second plan 23, 25, la première largeur étant au plus égale à la moitié de la seconde largeur.

15. Procédé de détection d'objets avec une grille lumineuse (10, 30, 40, 50) comprenant les étapes consistant à :
- émettre des premiers rayons lumineux de surveillance (18a) espacés à un premier espacement de trame (15a) dans un premier plan (23),
- émettre des seconds rayons lumineux de surveillance (18b) espacés à un second espacement de trame (15b) dans un second plan (25),
- dans lequel le premier plan (23) et le second plan (25) sont parallèles l'un à l'autre,
- détecter les premiers et seconds rayons lumineux de surveillance. **caractérisé en ce que** le procédé comprend en outre les étapes consistant à
- rediriger les premiers et seconds rayons lumineux de surveillance (18a, 18b) dans un plan de surveillance commun (21),
- dans lequel les premiers et seconds rayons lumineux de surveillance (18a, 18b) ont un espacement de trame de surveillance (36) l'un par rapport à l'autre dans le plan de surveillance commun (21) qui est plus petit que le premier espacement de trame (15a) et/ou le second espacement de trame (15b).
